# FASCICULE DE BREVET EUROPEEN

(11) **EP 3 880 454 B1**
(45) Date de publication et mention de la délivrance du brevet: **15.03.2023**
(21) Numéro de dépôt: 19836813.6
(22) Date de dépôt: 14.11.2019
(51) Int. Cl.: B29D 30/16, B29D 30/30

(54) **DISPOSITIF POUR LA POSE SINUSOIDALE DE NAPPE DE RENFORT SUR UN TAMBOUR, AVEC ROULEAU APPLICATEUR PILOTÉ EN LACET ET SUSPENDU EN ROULIS**
VORRICHTUNG ZUM SINUSFÖRMIGEN VERLEGEN EINES VERSTÄRKUNGSBLECHES AUF EINER TROMMEL MIT EINER GIERGESTEUERTEN WALZENAUFGEHÄNGTEN AUFTRAGSWALZE
DEVICE FOR SINUSOIDALLY LAYING A REINFORCING SHEET ON A DRUM, COMPRISING A YAW-STEERED, ROLL-SUSPENDED APPLICATOR ROLL

(30) Priorité: 16.11.2018 FR 1860632
(43) Date de publication de la demande: 22.09.2021
(73) Titulaire: COMPAGNIE GENERALE DES ETABLISSEMENTS MICHELIN, 63000 Clermont-Ferrand (FR)
(72) Inventeur: DAUMAS, Franck, 63040 CLERMONT-FERRAND CEDEX 9 (FR); CHAGNARD, Jeremy, 63040 CLERMONT-FERRAND CEDEX 9 (FR); MASSOPTIER-DAVID, Michaël, 63040 CLERMONT-FERRAND CEDEX 9 (FR); GUERY, Bertrand, 63040 CLERMONT-FERRAND CEDEX 9 (FR)
(74) Mandataire: Redouté, Gilles Pierre
(86) Numéro de dépôt international: PCT/FR2019/052701
(87) Numéro de publication internationale: WO 2020/099788

(56) Documents cités:
- BE-A- 781 921
- US-A1- 2014 231 024

## Description

La présente invention concerne le domaine de la fabrication des bandages, et plus particulièrement le domaine de la fabrication des bandages pneumatiques.

Ladite invention se rapporte plus spécifiquement à la pose d'une bande de renfort permettant de renforcer un tel bandage, et notamment à la pose d'une bande de renfort dite « frette » qui entoure la circonférence dudit bandage.

Il est connu, par exemple par le document de brevet BE-781921, de former sur un tambour une structure de renfort en déposant sur ledit tambour une bande de renfort à laquelle on fait décrire une trajectoire de pose qui va et vient d'un bord à l'autre dudit tambour en formant une ligne brisée.

Chaque fois que l'on parvient à un bord du tambour, c'est-à-dire à chaque sommet d'une alternance de la trajectoire de pose, il est nécessaire d'opérer un pliage de la bande de renfort sur elle-même, et d'écraser le pli ainsi formé au moyen d'un rouleau qui plaque le pli contre le tambour, de sorte à pouvoir créer un coude qui renverse la bande de renfort et la redirige ainsi vers l'autre bord du tambour.

En pratique, un tel procédé n'est pas applicable efficacement à tout type de bande de renfort, dans la mesure où il est nécessaire que ladite bande supporte sans dommage le pliage sur elle-même, et qu'elle conserve, malgré le pliage, une bonne capacité à adhérer sur le tambour.

En outre, la présence d'un pli induit une certaine discontinuité de la structure de renfort, puisque le pliage modifie localement l'agencement et les propriétés mécaniques de la bande de renfort, et crée de surcroît une surépaisseur de matière, ce qui peut avoir une incidence sur la qualité et les performances du bandage ainsi renforcé.

Le document de brevet US 2014/231024 A1 divulgue les caractéristiques du préambule de la revendication indépendante 1.

Les objets assignés à l'invention visent par conséquent à remédier aux inconvénients susmentionnés et à proposer un nouveau dispositif de pose de bande de renfort qui permette de réaliser une pose précise, reproductible et bien maîtrisée d'une bande de renfort continue sur une surface de réception, en particulier d'une bande de renfort présentant une rigidité relativement élevée, tout en préservant les qualités et l'homogénéité de ladite bande de renfort et du bandage qui en résulte.

Les objets assignés à l'invention sont atteints au moyen d'un dispositif selon la revendication indépendante 1.

Avantageusement, l'association d'un rouleau applicateur et d'une unité de pilotage en lacet permet de diriger ledit rouleau applicateur de sorte à imposer à la bande de renfort en cours de pose, même lorsque ladite bande de renfort présente une rigidité élevée, un suivi précis de la trajectoire de pose voulue, tout en exerçant à tout moment de l'opération de pose une compression sur toute la largeur de ladite bande de renfort, compression qui permet de plaquer en continu ladite bande de renfort au contact de la surface de réception, de sorte que ladite bande de renfort adhère à et épouse parfaitement ladite surface de réception, y compris dans les zones courbes formant les coudes des ondulations.

L'invention permet donc de réaliser, de manière précise et parfaitement contrôlée, une pose « à plat » de la bande de renfort, selon un plan de référence qui est sensiblement voire exactement tangent à la surface de réception.

Avantageusement, l'invention permet de conférer à ladite bande de renfort en cours de pose, sur la surface de réception, et plus particulièrement dans le plan de référence, une orientation en lacet qui correspond sensiblement à l'orientation en lacet du vecteur directeur tangent à la trajectoire de pose voulue.

On peut ainsi obtenir sur la surface de réception toute courbure à plat souhaitée de la bande de renfort, et ce sans provoquer de soulèvement (décollement) de la bande de renfort par rapport à ladite surface de réception, de froissement, de pliage ou de déchirement de la bande de renfort.

De la sorte, on peut obtenir des ondulations régulières et homogènes, dont la courbure à plat varie de manière progressive le long de la trajectoire de pose pour se conformer à la forme souhaitée des ondulations.

Avantageusement, le dispositif selon l'invention permet de préserver la continuité de la bande de renfort ainsi que les propriétés mécaniques de cette dernière, et par conséquent, *in fine,* d'améliorer les performances du bandage obtenu.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue d'ensemble en perspective, la pose par un dispositif selon l'invention d'une bande de renfort sur une surface de réception formée par un tambour.

La figure 2 illustre, selon une vue de face, le dispositif de la figure 1 réalisant la pose d'une même bande de renfort d'un seul tenant sur plusieurs tours successifs du tambour, de sorte à former un treillis de renfort.

La figure 3 représente, selon une vue de côté, le dispositif des figures 1 et 2.

La figure 4 est une vue de dessus de la figure 3, faisant notamment apparaître un exemple de mécanisme de suspension en roulis qui permet au rouleau applicateur d'accommoder les irrégularités ou les galbes de la surface de réception.

La figure 5 illustre, selon une vue de côté, le détail du mécanisme de suspension en roulis de la figure 4 et de son inclinaison selon un angle de chasse positive au regard du sens de progression dans lequel s'opère, pendant la pose de la bande de renfort, le déplacement longitudinal relatif du rouleau applicateur par rapport à la surface de réception.

La présente invention concerne un dispositif 1 de pose de bande de renfort 2 pour le renforcement d'un bandage, de préférence d'un bandage pneumatique.

De façon connue en soi, la bande de renfort 2 comprend une pluralité de fils de renfort continus, de préférence métalliques, qui sont répartis sur la largeur W2 de la bande de renfort, parallèlement les uns aux autres et parallèlement à la direction longitudinale de ladite bande de renfort 2, et qui sont noyés dans une couche de gomme, laquelle se compose de préférence d'une préparation à base de caoutchouc non vulcanisé.

Chaque fil de renfort pourra être multibrins, c'est-à-dire constitué de plusieurs filaments assemblés par tressage, ou bien de préférence monobrin, c'est-à-dire constitué d'un seul filament d'un seul tenant, préférentiellement métallique.

La présente invention peut s'appliquer plus particulièrement à la pose d'une bande de renfort 2 relativement rigide, dont chaque fil de renfort, appartenant à la pluralité de fils de renfort répartis sur la largeur W2 de la bande, présente un diamètre supérieur ou égal à 2 mm, par exemple compris entre 2 mm et 5 mm, et notamment égal, ou sensiblement égal, à 3 mm, par exemple égal à 3 mm +/- 0,1 mm, ou 3 mm +/- 0,2 mm, voire 3 mm +/- 0,5 mm.

A titre d'exemple, on pourra ainsi employer comme fil de renfort un fil multibrins, ou « câblé », formé par la réunion de 52 filaments présentant chacun un diamètre de 0,26 mm et dit « 52.26 », ce qui confère audit fil de renfort multibrins un diamètre hors-tout de 3,1 mm.

Dans un exemple préférentiel d'application, la bande de renfort 2 pourra présenter sur sa largeur W2 sept fils de renfort (monobrin ou multibrins), présentant chacun un diamètre de 3 mm (+/- 0,2 mm), par exemple sept câblés 52.26 au sens ci-dessus, répartis sur une largeur W2 donnée, par exemple 27 mm, et noyés dans une épaisseur de gomme donnée, par exemple égale à 5 mm.

La bande de renfort 2 sera de préférence destinée à former une frette, qui vient cercler le bandage sur toute la circonférence dudit bandage.

En particulier, et sans que cela ne constitue une restriction de l'invention, ladite bande de renfort 2 pourra être posée par-dessus des nappes de renfort dites « nappes sommet » qui contiennent des fils de renfort disposés en oblique par rapport à la direction circonférentielle équatoriale du bandage, et qui se superposent à la carcasse radiale du bandage pour former avec cette dernière des structures de renfort triangulaires caractéristiques des bandages pneumatiques à carcasse radiale.

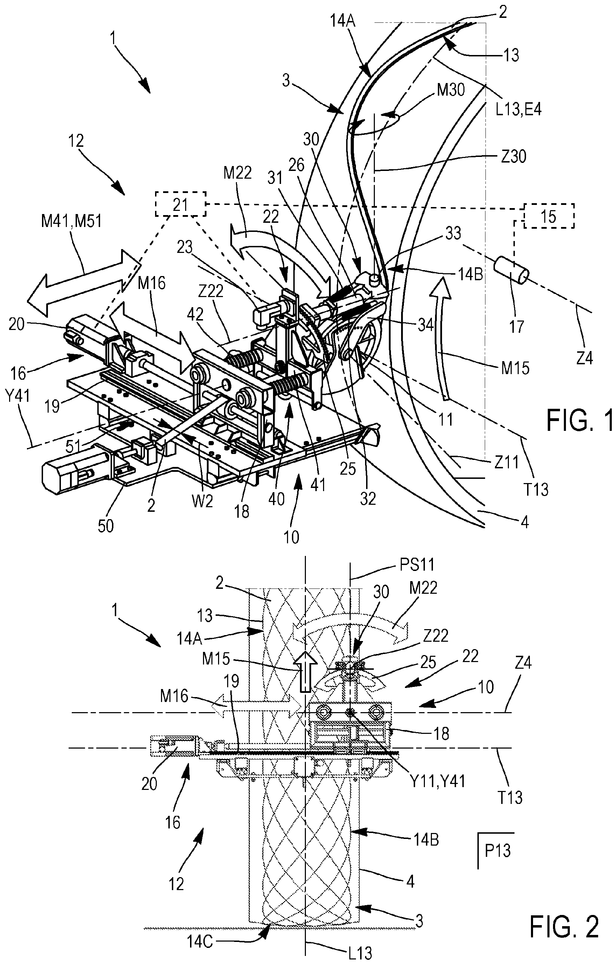

Tel que cela est notamment bien visible sur les figures 1 et 2, le dispositif comprend une surface de réception 3.

Cette surface de réception 3 est destinée à recevoir la bande de renfort 2.

Ladite surface de réception 3 peut comporter, s'il y a lieu, un élément de bandage que l'on souhaite renforcer, par exemple une nappe sommet ou un assemblage de nappes sommet sur laquelle ou lesquelles on souhaite poser la bande de renfort 2.

La surface de réception 3 peut bien entendu prendre toute forme appropriée.

Ainsi, dans l'absolu, on pourrait notamment envisager d'utiliser une surface de réception 3 plane, formée par exemple par une table d'assemblage ou par le tapis d'un convoyeur.

Toutefois, de préférence, la surface de réception 3 présentera une forme de révolution, et sera donc fermée sur elle-même.

Un tel agencement de révolution est particulièrement compact et permet avantageusement de réaliser une pose de la bande de renfort 2 sur plusieurs tours consécutifs, tel que cela est illustré sur la figure 2, de sorte à obtenir un treillis de renfort, au sein duquel les ondulations de la bande de renfort 2 se superposent en s'entrecroisant.

En outre, un tel agencement de révolution permet de conférer le cas échéant à la bande de renfort 2 posée une forme qui est proche de, voire identique à, la forme définitive que ladite bande de renfort adoptera au sein du bandage.

Ainsi, de préférence, tel que cela est illustré sur les figures 1, 2, 3, 4 et 5, la surface de réception 3 est formée par un tambour 4 qui est monté en rotation autour d'un axe central Z4 de tambour.

Ledit tambour 4 pourra se présenter sous la forme d'un cylindre droit de base circulaire, ou bien encore sous la forme d'un noyau torique dont la forme galbée correspond sensiblement à la forme définitive du bandage.

Quelle que soit la forme du tambour 4, la pose de la bande de renfort 2 s'effectuera de préférence sur la surface circonférentielle radialement externe dudit tambour.

Le dispositif 1 comprend également une tête de pose 10 qui porte un rouleau applicateur 11.

Ledit rouleau applicateur 11 est monté en rotation sur un axe central de rouleau Z11 de sorte à pouvoir acheminer par roulement une bande de renfort 2 et presser ladite bande de renfort 2 contre la surface de réception 3.

En pratique, la vitesse linéaire de pose selon laquelle la bande de renfort 2 est déposée sur la surface de réception 3 à chaque instant considéré est donc égale à la vitesse circonférentielle du rouleau applicateur 11 audit instant considéré.

Le dispositif 1 comprend en outre un système d'entraînement 12 permettant de créer un mouvement relatif de la tête de pose 11 par rapport à la surface de réception 3 de sorte à pouvoir faire décrire à la bande de renfort 2 posée sur ladite surface de réception 3 un tracé dit « trajectoire de pose » 13 qui présente, selon une direction longitudinale L13, une succession d'ondulations 14A, 14B, 14C.

Plus préférentiellement, et tel que cela est notamment visible sur la figure 1, la trajectoire de pose 13 présentera une forme sinusoïdale.

La période de cette trajectoire de pose 13, c'est-à-dire la distance couverte le long de la direction longitudinale L13 par deux alternances successives (une alternance par convention « positive », puis une alternance par convention « négative ») de cette trajectoire de pose ondulée, est strictement inférieure à la longueur développée de la circonférence du tambour 4, de telle sorte que la bande de renfort décrit plusieurs oscillations transverses sur un même tour de tambour 4.

Afin de générer la trajectoire de pose 13, le système d'entraînement 12 comprend :
- une unité 15 de déplacement longitudinal, qui génère une première composante de déplacement relatif M15 entre la surface de réception 3 et le rouleau applicateur 11 selon la direction longitudinale L13 ; on pourra désigner cette première composante de déplacement relatif M15 en tant que « composante longitudinale M15 » ;
- une unité 16 de déplacement transversal, qui génère une seconde composante de déplacement relatif M16 du rouleau applicateur 11 par rapport à la surface de réception 3, selon une direction transversale T13 sécante à la direction longitudinale L13, et sous forme d'un va-et-vient qui correspond à une amplitude souhaitée des ondulations 14A, 14B, 14C ; on pourra désigner cette seconde composante de déplacement relatif M16 en tant que « composante transversale M16 » ;

De façon particulièrement préférentielle, par commodité de mise en oeuvre, la direction transversale T13 est perpendiculaire à la direction longitudinale L13.

On désignera par «plan de référence » P13 le plan défini par la direction longitudinale L13 et la direction transversale T13.

On désignera par ailleurs par « axe d'applique » Y11 l'axe qui est perpendiculaire à l'axe central Z11 dudit rouleau applicateur 11, qui est contenu dans le plan sagittal PS11 dudit rouleau applicateur 11, et sécant au point de contact, ou à la ligne de contact, que le rouleau applicateur 11 établit, par l'intermédiaire de la bande de renfort 2, contre la surface de réception 3.

Le plan sagittal PS11, qui est normal à l'axe central du rouleau Z11, divise fictivement le rouleau applicateur 11 en deux moitiés, ici deux demi-largeurs de rouleau applicateur 11, qui sont sensiblement voire exactement symétriques l'une de l'autre. L'intersection dudit plan sagittal PS11 avec la surface radialement externe du rouleau applicateur 11, sur laquelle s'appuie la bande de renfort 2, forme donc un cercle qui correspond à la ligne équatoriale dudit rouleau applicateur 11.

En pratique, l'axe d'applique Y11 correspond à la direction selon laquelle le rouleau applicateur 11 vient s'appuyer à l'encontre de la surface de réception 3 pour plaquer la bande de renfort 2 au contact de ladite surface de réception 3.

On notera par ailleurs que, lorsque la surface de réception 3 est formée par un tambour 4, l'axe central de tambour Z4 est de préférence parallèle à la direction transversale T13, et la ligne équatoriale circonférentielle E4 dudit tambour 4 définit de préférence la direction longitudinale L13.

Ainsi, le plan de référence P13 correspond à un plan qui est tangent à la surface de réception 3, en un point de contact qui est situé sur la ligne équatoriale E4 du tambour 4.

En ce point de contact entre le plan de référence P13 et la surface du tambour 4, la direction longitudinale L13 coïncide avec la droite tangente à ladite ligne équatoriale E4.

L'utilisation d'un tambour 4 ainsi orienté simplifie la gestion de l'asservissement des mouvements relatifs M15, M16 du rouleau applicateur 11 par rapport à la surface de réception 3, et permet notamment de générer la première composante de déplacement M15, à savoir le mouvement relatif entre le rouleau applicateur 11 et la surface de réception 3 selon la direction longitudinale L13, simplement en mettant en rotation ledit tambour 4 autour de son axe central Z4, de sorte à faire défiler la surface de réception 3 en vis-à-vis du rouleau applicateur 11.

A ce titre, l'unité 15 de déplacement longitudinal comprendra de préférence, tel que cela est illustré sur la figure 1, un moteur de défilement longitudinal 17, de préférence électrique, qui est plus particulièrement agencé ici pour entraîner le tambour 4 en rotation autour de son axe central Z4.

De préférence, la mise en rotation du tambour 4 est monotone, en ceci qu'elle est réalisée dans un seul et même sens pour toute une opération de pose en continu de la bande de renfort.

L'unité 16 de déplacement transversal pourra quant à elle comprendre par exemple une table de déplacement transversal 18 qui est montée en translation guidée sur un rail transversal 19 rectiligne orienté parallèlement à la direction transversale T13 voulue.

La seconde composante de déplacement M16, à savoir la composante de déplacement selon la direction transversale T13, pourra avantageusement être générée par un moteur de déplacement transversal 20, de préférence électrique, qui entraîne ici la table 18 susmentionnée.

Bien entendu, l'unité 15 de déplacement longitudinal et l'unité 16 de déplacement transversal seront coordonnées l'une par rapport à l'autre, de préférence, tel que cela est illustré sur la figure 1, au moyen d'une unité de synchronisation 21, du genre calculateur électronique, de manière à pouvoir contrôler l'amplitude et la période spatiale des ondulations 14A, 14B, 14C de la trajectoire de pose 13, et plus préférentiellement de manière à générer une trajectoire de pose 13 sinusoïdale.

De préférence, par convention, la trajectoire de pose 13 sera centrée sur la direction longitudinale L13, et plus particulièrement sur la ligne équatoriale E4 du tambour 4, de sorte que les ondulations 14A, 14B, 14C forment des alternances de même amplitude mais de signes opposés en passant alternativement d'un côté à l'autre de ladite direction longitudinale L13.

De préférence, l'amplitude des alternances des ondulations 14A, 14B, 14C, et donc l'amplitude globale de la seconde composante de déplacement M16 selon la direction transversale T13, sera suffisante pour couvrir au moins 50%, de préférence au moins 75%, voire au moins 90% de la largeur de la surface de réception 3 considérée selon ladite direction transverse T13 et en projection dans le plan de référence P13.

L'invention permet en effet avantageusement de décrire de grandes amplitudes, et ainsi de s'adapter à de nombreuses tailles, et en particulier de nombreuses largeurs, de bandages pneumatiques, sans endommager la bande de renfort 2 ainsi posée en continu.

Selon l'invention, le système d'entraînement 12 comprend en outre une unité 22 de pilotage en lacet, synchronisée avec l'unité 15 de déplacement longitudinal et l'unité 16 de déplacement transversal.

La coordination de l'unité 22 de pilotage en lacet avec les unités 15 de déplacement longitudinal et 16 de déplacement transversal est de préférence réalisée par l'unité de synchronisation 21 susmentionnée.

Cette unité 22 de pilotage en lacet pilote et ajuste automatiquement, au moyen d'un moteur de lacet 23, l'orientation en lacet M22 de l'axe central Z11 du rouleau applicateur 11, considérée en azimut autour d'un axe dit « axe de lacet » Z22 qui est normal au plan de référence P13 défini par la direction longitudinale L13 et la direction transverse T13, de sorte à conférer à la bande de renfort 2 en cours de pose une orientation en lacet qui correspond à l'orientation en lacet de la trajectoire de pose 13 à réaliser.

Ainsi, avantageusement, l'unité de pilotage en lacet 22 peut forcer à chaque instant le rouleau applicateur 11 à s'aligner en lacet sur le vecteur directeur de la trajectoire de pose 13 souhaitée, c'est-à-dire sur le vecteur tangent à la trajectoire de pose 13 souhaitée, considéré en projection dans le plan de référence P13.

On applique ainsi la bande de renfort 2 sur la surface de réception 3 en dirigeant à tout instant le rouleau applicateur 11 de manière à faire rouler la circonférence dudit rouleau applicateur 11 sur le, et le long du, tracé de la trajectoire de pose 13 voulue.

La pose sera ainsi maîtrisée, et la forme résultante du cheminement de la bande de renfort sur la surface de réception 3 la plus exacte possible.

On notera également que l'asservissement en lacet du rouleau applicateur 11 permet de ne pas avoir à former de plis lors des rebroussements du sens du mouvement de déplacement transversal M16, si bien que l'on pose la bande de renfort 2 en plaquant toujours la même face de ladite bande de renfort 2 en continu sur la surface de réception 3, ou encore, de manière équivalente, en conservant apparente toujours la même face de ladite bande de renfort 2 (à savoir la face opposée à la face plaquée contre la surface de réception 3), sans provoquer de retournement de ladite bande de renfort 2 sur elle-même, et sans créer de surépaisseur de matière indésirable.

De préférence, par commodité de mise en oeuvre et de pilotage, le moteur de lacet 23 sera un moteur électrique.

Pour assurer le positionnement en lacet du rouleau applicateur 11, ledit moteur de lacet 23 pourra par exemple, tel que cela est visible sur les figures 1, 2 et 3, entraîner un pignon 24 qui engrène à son tour sur une portion de couronne dentée 25, cette dernière étant de préférence associée à un arbre de lacet 26 qui porte le rouleau applicateur 11 et qui matérialise l'axe de lacet Z22.

Par convention, on pourra poser que l'orientation en lacet M22 du rouleau applicateur 11 est nulle, c'est-à-dire que l'on a M22 = 0 degrés, lorsque le rouleau applicateur 11 est aligné en lacet sur la direction longitudinale L13, c'est-à-dire plus particulièrement lorsque l'axe central Z11 du rouleau est parallèle à la direction transversale T13 qui est perpendiculaire à ladite direction longitudinale L13.

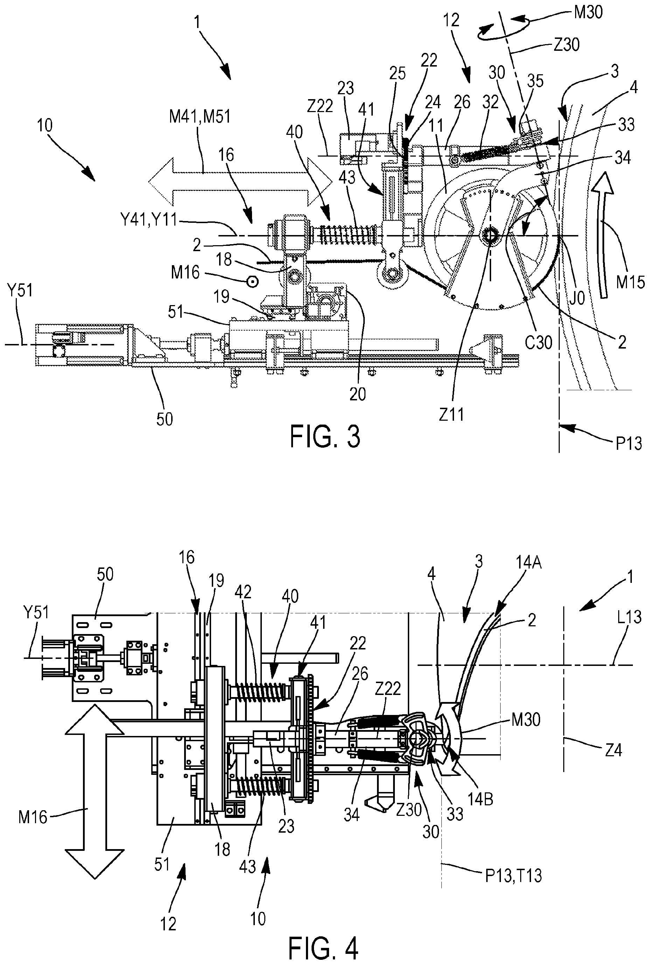

Par ailleurs, selon une caractéristique préférentielle qui peut constituer une invention à part entière, notamment en combinaison préférentielle avec une unité de pilotage en lacet 22 ou éventuellement indépendamment de la présence d'une telle unité de pilotage en lacet 22, la tête de pose 10 comprend un mécanisme de suspension en roulis 30 qui autorise un débattement en roulis M30 du rouleau applicateur 11 par rapport à la direction longitudinale L13, autour d'un axe de roulis Z30, tel que cela est notamment illustré sur la figure 4, et qui comprend au moins un organe de rappel en roulis 31, 32 qui tend à rappeler le rouleau applicateur 11 vers une inclinaison en roulis de référence.

De préférence l'organe de rappel en roulis 31, 32 tend à rappeler le rouleau applicateur 11 vers une inclinaison en roulis nulle, selon laquelle l'axe central du rouleau Z11 est parallèle au plan de référence P13.

Avantageusement, la présence d'un mécanisme de suspension en roulis 30 permet au rouleau applicateur 11 de suivre finement la surface de réception 3 quelle que soit la forme de ladite surface de réception 3, et en particulier si ladite surface de réception 3 présente une forme galbée, notamment toroïdale, et/ou si ladite surface de réception 3 présente des irrégularités, par exemple des ressauts, tel que cela est le cas lorsque la bande de renfort 2 en cours de pose à l'instant considéré croise l'emplacement d'une portion de cette même bande de renfort 2 qui a été posée antérieurement sur la surface de réception 3, au cours d'un tour précédent du tambour 4.

On notera en particulier que, grâce au mécanisme de suspension en roulis 30, le rouleau applicateur 11 pourra maintenir en permanence son axe d'applique Y11 normal à la surface de réception 3 au point de contact considéré entre la bande de renfort 2 portée par ledit rouleau applicateur 11 et la surface de réception 3.

En d'autres termes, le mécanisme de suspension en roulis 30 permettra avantageusement de maintenir la droite normale à la surface externe (cylindrique) du rouleau applicateur 11 confondue avec la droite normale à la surface de réception 3, au point de contact considéré entre ladite surface de réception 3 et la bande de renfort 2 portée par ladite surface du rouleau applicateur 11. La surface de réception 3 et la surface du rouleau applicateur 11, et plus précisément la surface correspondante de la bande de renfort 2 (pour tenir compte de l'épaisseur de la bande de renfort 2), partageront ainsi, à l'instant considéré, une même normale, et, par conséquent un même plan tangent.

Le rouleau applicateur 11 pourra ainsi exercer une pression relativement uniforme sur la bande de renfort 2 à l'encontre de la surface de réception 3, sur toute la largeur W2 de ladite bande de renfort 2, ce qui garantira par conséquent une bonne adhérence de la bande de renfort 2 sur la surface de réception 3.

De même, en exerçant une pression d'application répartie sur toute la largeur W2 de la bande de renfort, et relativement uniforme, on limite le risque de laisser subsister des cavités ou des bulles d'air entre la bande de renfort 2 et la surface de réception 3, et plus particulièrement entre la bande de renfort 2 et les nappes de renfort sous-jacentes, déjà présentes sur le tambour 4.

L'axe de roulis Z30 sera bien entendu non perpendiculaire au plan de référence P13, de sorte à ce qu'une rotation du rouleau applicateur 11 autour dudit axe de roulis Z30, et plus particulièrement la rotation du plan sagittal PS11 du rouleau applicateur autour de l'axe de roulis Z30 contenu dans ledit plan sagittal PS11, induise une composante de basculement latéral dudit rouleau applicateur 11, en roulis, autour de la direction longitudinale L13.

On notera que lorsque le rouleau applicateur 11 est aligné sur la direction longitudinale L13, c'est-à-dire lorsque l'angle de lacet est nul : M22 = 0 degrés, l'axe de roulis Z30 sera de préférence contenu dans le plan défini par la direction longitudinale L13 associée au plan de référence P13 et par l'axe de lacet Z22 normal audit plan de référence P13.

Plus globalement, on notera que, par convention et par commodité de description, on considérera le plan de référence P13 comme le plan d'assiette neutre, c'est-à-dire comme le plan qui est défini par un angle de roulis nul et un angle de tangage nul, et par rapport auquel se définissent les inclinaisons, notamment l'inclinaison en roulis M30, du rouleau applicateur 11.

De même, comme indiqué plus haut, l'orientation en lacet du rouleau applicateur 11, et plus particulièrement l'orientation en lacet M22 de l'axe central Z11 et/ou, de manière équivalente, l'orientation en lacet du plan sagittal PS11 dudit rouleau applicateur 11, correspond quant à elle à la direction azimutale dudit rouleau applicateur 11, considérée en projection dans ledit plan de référence P13, autour d'un axe normal audit plan de référence P13.

Le mécanisme de suspension en roulis 30 comprendra de préférence un pivot de roulis 33, dont l'axe de rotation matérialise l'axe de roulis Z30.

Le rouleau applicateur 11 pourra alors être porté par un support approprié, tel qu'une chape 34, qui s'articule par rapport à l'arbre de lacet 26 au moyen dudit pivot de roulis 33.

On notera par ailleurs que le ou les organes de rappel en roulis 31, 32, qui permettent d'obtenir l'effet de suspension, pourront être des organes passifs, de type ressorts, notamment des ressorts de traction, ou des ensembles ressort-amortisseur, qui assurent une suspension passive en roulis, sans que l'on réalise un quelconque apport d'énergie par lesdits organes de rappel en roulis ou un quelconque asservissement actif desdits organes de rappel en roulis.

En variante, on pourrait toutefois utiliser un ou des organes de rappel en roulis 31, 32 actifs, c'est-à-dire formés par des actionneurs, du genre vérins ou moteurs électriques pas-à-pas, qui seraient asservis automatiquement, par exemple au moyen de l'unité de synchronisation 21, de sorte à réaliser une suspension active en roulis.

Selon une possibilité préférentielle de mise en oeuvre, le mécanisme de suspension en roulis 30 comprend, tel que cela est bien visible sur les figures 1 et 4, un palonnier 35 pourvu de deux bras 36, 37 qui s'étendent de part et d'autre de l'axe de roulis Z30 et qui sont couplés respectivement à un premier organe de rappel 31 et à un second organe de rappel 32.

Un tel agencement est avantageusement simple et compact, et permet d'équilibrer efficacement le rappel vers la position de roulis de référence.

Comme indiqué ci-dessus, on pourra opter ici pour une suspension active ou, par souci de simplicité, pour une suspension passive.

A ce titre, de préférence, le premier organe de rappel en roulis 31 est formé par un premier ressort de traction.

De même, le second organe de rappel en roulis 32 est de préférence formé par un second ressort de traction.

L'utilisation d'un ou plusieurs ressorts de rappel 31, 32 sollicités en traction confère notamment une bonne stabilité et une bonne précision à l'action de rappel qui tend à rappeler le rouleau applicateur 11, et plus particulièrement qui tend à rappeler le palonnier 35, vers la position de roulis de référence, ici de préférence une position correspondant à un angle de roulis nul.

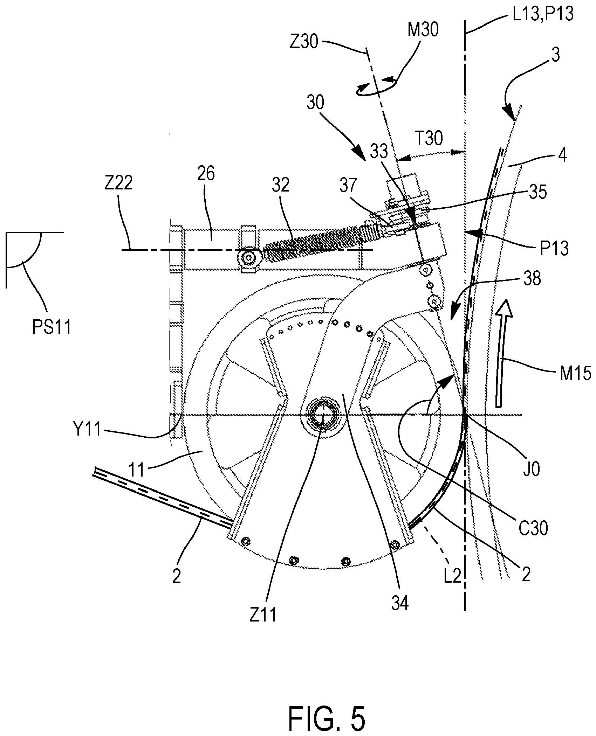

De préférence, tel que cela est notamment visible sur la figure 5, l'axe de roulis Z30 est orienté par rapport à la surface de réception 3, et plus particulièrement par rapport au plan de référence P13, selon un angle de chasse C30 qui est positif.

Ledit angle de chasse C30 est défini, de façon conventionnelle, par rapport à la normale à la surface de réception 3 au point de contact considéré, normale qui correspond ici en pratique à l'axe d'applique Y11. L'angle de chasse C30 correspond ainsi à l'angle d'inclinaison de l'axe de roulis Z30 par rapport à ladite normale à la surface de réception.

L'angle de chasse C30 est choisi positif de telle sorte que le pivot de roulis 33 se présente, en considération du sens de déplacement relatif du rouleau applicateur 11 par rapport à la surface de réception, et donc en considération du sens du vecteur directeur de la trajectoire de pose 13, en arrière par rapport à l'axe central Z11 du rouleau applicateur 11 et par rapport à l'axe d'applique Y11, au niveau duquel la bande de renfort 2 portée par le rouleau applicateur entre au contact de la surface de réception 3.

De préférence, ledit angle de chasse C30 positif est compris entre 60 degrés et 85 degrés, et plus préférentiellement égal à 75 degrés.

Par convention et par commodité de réglage, les valeurs susmentionnées d'angle de chasse C30 sont de préférence mesurées entre la normale au plan de référence P13, ici l'axe de lacet Z22, et l'axe de roulis Z30, dans le plan sagittal PS11 du rouleau applicateur 11, lorsque le rouleau applicateur 11 est orienté selon un angle de lacet nul (M22 = 0), donc orienté parallèlement à la direction longitudinale L13, et selon un angle de roulis nul, c'est-à-dire alors que le plan sagittal PS11 dudit rouleau applicateur est perpendiculaire au plan de référence P13.

Avantageusement, la mise en oeuvre d'un angle de chasse C30 positif permet d'améliorer la maîtrise de la trajectoire asservie du rouleau applicateur 11, et plus particulièrement d'améliorer la stabilité et la précision du contrôle de l'orientation en lacet M22 dudit rouleau applicateur 11, notamment en favorisant la tendance du rouleau applicateur 11 à s'auto-aligner sur le vecteur directeur de la trajectoire de pose 13, et donc sur la trajectoire de pose 13 définie par le système d'entraînement 12.

En outre, l'angle complémentaire à l'angle de chasse C30, dit « angle de déviation » T30, qui correspond à l'inclinaison en tangage de l'axe de roulis Z30 par rapport au plan de référence P13, offre avantageusement, tel que cela est visible sur la figure 5, un espace de dégagement 38 entre le système d'entraînement 12 et la surface de réception 3, au voisinage du rouleau applicateur 11, ici en aval de la zone où la bande de renfort 2 atteint la surface de réception 3, ce qui permet au système d'entraînement 12, et plus particulièrement à l'unité 22 de pilotage en lacet et au mécanisme de suspension en roulis 30, de manoeuvrer sans obstacle.

Ledit angle de déviation T30, qui vaut donc T30 = 90 degrés - C30, est ici de préférence compris, en référence aux valeurs préférentielles d'angle de chasse C30 mentionnées plus haut, entre 5 degrés et 30 degrés, et plus préférentiellement égal à 15 degrés.

De préférence, l'axe de roulis Z30 est incliné par rapport à la surface de réception 3 de telle sorte que, tel que cela est illustré sur la figure 5, ledit axe de roulis Z30, la fibre neutre L2 de la bande de renfort 2 qui est en cours de pose sur la surface de réception 3, et enfin un axe dit « axe d'applique » Y11, qui est, comme indiqué plus haut, perpendiculaire à l'axe central Z11 du rouleau applicateur 11, contenu dans le plan sagittal PS11 dudit rouleau applicateur 11, et qui passe par le contact formé, via la bande renfort 2, entre le rouleau applicateur 11 et la surface de réception 3, sont concourants.

On note J0 le point de rencontre de ces trois axes concourants.

La « fibre neutre » L2 désigne, au sens usuel de la théorie des poutres, la ligne fictive qui s'étend selon la direction longitudinale de la bande de renfort 2, qui est située dans l'épaisseur de ladite bande de renfort 2, et qui, alors que la bande de renfort 2 est incurvée, et donc fléchie, sur le rouleau applicateur 11, ne subit pas de déformation sous contrainte, c'est-à-dire ne subit ni élongation sous traction, ni contraction en compression.

En première approximation, si l'on peut sensiblement négliger l'épaisseur de la bande de renfort 2 aux regard des autres dimensions concernées, on pourra, pour définir le point de rencontre J0, assimiler à la fibre neutre L2 la droite qui est tangente à la surface de réception 3 et définie par le vecteur directeur de la trajectoire de pose 13 ; en d'autres terme, on pourra considérer que l'axe d'applique Y11 et l'axe de roulis Z30 sont concourants en un point de rencontre J0 situé sur la surface de réception 3.

Avantageusement, l'agencement concourant susmentionné supprime les bras de leviers qui pourraient amplifier les effets perturbateurs des efforts qui sont générés sur le rouleau applicateur 11 par l'opération de pose, et plus particulièrement qui pourraient amplifier les effets de l'effort de réaction qui est généré par la surface de réception 3 à l'encontre de la bande de renfort 2 guidée par le rouleau applicateur 11, et ce notamment lorsque surviennent des changements d'orientation dudit effort de réaction qui sont provoqués par le passage du rouleau applicateur 11 sur des ressauts ou des portions galbées de la surface de réception 3.

Ainsi, les perturbations étant réduites, l'opération de pose, et plus particulièrement la gestion de l'alignement en lacet du rouleau applicateur 11 par rapport au vecteur directeur de la trajectoire de pose 13 souhaitée, est particulièrement précise et stable.

On notera du reste que cette contrainte d'agencement concourant est parfaitement concordante avec les plages et valeurs d'angle de chasse C30, et donc d'angle de déviation T30, mentionnées plus haut.

Par ailleurs, la tête de pose 10 comporte de préférence un mécanisme presseur 40 comprenant un chariot, dit « chariot de suspension en profondeur » 41, qui porte le rouleau applicateur 11 et l'unité de pilotage en lacet 22.

Ce chariot de suspension en profondeur 41 est guidé en translation selon une direction dite « direction de profondeur » Y41 normale au plan de référence P13, et est précontraint élastiquement, de préférence par un ou des ressorts de compression 42, 43, en direction de la surface de réception 3, afin de maintenir le rouleau applicateur 11 et la bande de renfort 2 au contact de la surface de réception 3.

Cette suspension en profondeur permet avantageusement de maintenir une précontrainte de compression de la bande de renfort 2 contre la surface de réception 3, afin de favoriser l'adhérence de la bande de renfort 2 sur la surface de réception 3, tout en accommodant chaque fois que nécessaire, par un recul ou un retour élastique approprié, les variations d'épaisseur, et plus particulièrement les variations de rayon, de la surface de réception 3, notamment lorsque le rouleau 11 franchit une portion de la bande de renfort 2 déjà en place sur la surface de réception 3.

Le débattement en profondeur du chariot de suspension 41, et donc du rouleau applicateur 11, est illustré par la flèche M41 sur les figures 1 et 3.

Tel que cela est illustré sur les figures 1 à 3, la direction de profondeur Y41 est normale au plan de référence P13 qui est quant à lui de préférence tangent à la ligne équatoriale E4 du tambour 4, si bien que ladite direction de profondeur Y41 est de préférence radiale par rapport à l'axe central Z4 du tambour 4.

Ainsi, de préférence, le mécanisme presseur 40 assure, par rapport à l'axe central Z4 du tambour 4, une suspension radiale, précontrainte de façon centripète.

Bien entendu, tout comme pour la gestion du roulis, on ne sortirait pas du cadre de l'invention en réalisant une suspension en profondeur active, en remplaçant à cet effet les ressorts de compression 42, 43 par des actionneurs asservis adaptés, de préférence pilotés par l'unité de synchronisation 21.

Selon une variante préférentielle de réalisation, qui allie simplicité, compacité, légèreté et précision, la tête de pose 10 présente une structure étagée qui comprend successivement :
- une embase 50,
- une table de rapprochement 51 qui est montée mobile en translation rectiligne sur l'embase 50 selon une direction dite « direction de profondeur » Y51 qui est normale au plan de référence P13, de sorte à pouvoir sélectivement rapprocher ou éloigner le rouleau applicateur 11 de la surface de réception 3 ; on désignera par la flèche M51 le débattement en profondeur offert par la table de rapprochement 51 ; on notera en outre que, de préférence, la direction de profondeur Y51 de la table de rapprochement 51 est parallèle à, voire confondue avec, la direction de profondeur Y41 du chariot de suspension en profondeur Y41 décrit plus haut, de sorte que l'on peut, par commodité de représentation, illustrer les deux mouvements de profondeur par la même flèche M51, M41, bien que ces mouvements soient distincts l'un de l'autre ;
- une table de déplacement transversal 18 qui appartient à l'unité de déplacement transversal 16 et qui est montée mobile en translation rectiligne sur la table de rapprochement 51, selon la direction transversale T13 qui est perpendiculaire à la direction de profondeur Y51, de sorte à pouvoir générer et guider la seconde composante de mouvement relatif M16 du rouleau applicateur 11 par rapport à la surface de réception 3,
- un chariot 41, dit « chariot de suspension en profondeur», monté mobile en translation rectiligne sur la table de déplacement transversal 52, selon la direction de profondeur Y51, et précontraint élastiquement vers la surface de réception 3 ; comme indiqué plus haut, les directions de profondeur respectives de la table de rapprochement Y51 et du chariot de suspension en profondeur Y41 seront ici parallèles ;
- l'unité de pilotage en lacet 22, portée par ledit chariot de suspension en profondeur 41, et qui comprend un arbre de lacet 26 qui s'étend selon un axe de lacet Z22 parallèle à la direction de profondeur Y51, et qui est de préférence déporté par rapport à l'axe central Z11 du rouleau applicateur 11, ledit arbre de lacet 26 étant entraîné en rotation par rapport au chariot de suspension en profondeur 41 au moyen du moteur de lacet 23,
- un mécanisme de suspension en roulis 30 qui comprend un pivot de roulis 33 par lequel une chape 34 portant le rouleau applicateur 11 s'articule sur l'arbre de lacet 22, selon un axe de roulis Z30 qui est incliné par rapport à la direction de profondeur Y50 de sorte à conférer au rouleau applicateur 11, par rapport à la normale à la surface de réception 3, un angle de chasse C30 positif.

L'une et/ou l'autre des tables 51, 18 susmentionnées pourront être motorisées au moyen de moteurs électriques entraînant par exemple des mécanismes de conversion de type vis à billes.

Avantageusement, la structure étagée conformément à l'ordre indiqué ci-dessus, et qui présente ainsi l'unité de pilotage en lacet 22 et le mécanisme de suspension en roulis 30 en position terminale sur la tête de pose 10, permet de gérer le pilotage en lacet au plus près de la zone de pose de la bande de renfort 2, ce qui assure une grande précision, et d'accommoder les variations de la surface de réception 3 avec un minimum de pièces mobiles, et donc avec un minimum d'inertie et une grande réactivité et une bonne stabilité.

En outre, on notera que la table de rapprochement 51 permet avantageusement de définir un premier réglage, fixe, de la distance du rouleau applicateur 11 à la surface de réception 3, tandis que le chariot de suspension en profondeur 41 assure les mouvements différentiels amortis selon la même direction de profondeur Y51, Y41, ainsi que le placage élastique correspondant en compression dudit rouleau applicateur 11 et de la bande de renfort 2 contre ladite surface de réception 3.

Le fonctionnement d'un dispositif 1 selon l'invention va maintenant être décrit brièvement, en référence préférentielle à la figure 1.

Initialement, on engage la bande de renfort 2 sur le rouleau applicateur 11.

La bande de renfort 2 peut être produite par tout procédé adéquat, par exemple par calandrage ou par extrusion, et éventuellement être issue d'une bobine de stockage tampon dont on déroule la bande de renfort 2 pour approvisionner le dispositif 1.

La tête de pose 10 est manoeuvrée de sorte à venir se placer en vis-à-vis du tambour 4, et plus particulièrement de sorte à venir presser le rouleau applicateur 11 porteur de la bande de renfort 2 contre la surface de réception 3.

A cet effet, la table de rapprochement 51 s'approche radialement de la surface du tambour 4, jusqu'à engager le rouleau applicateur 11 contre la surface de réception, et à enfoncer légèrement par compression le chariot de suspension en profondeur 41 à l'encontre des ressorts de compression 41, 42, pour créer ou accentuer la précontrainte de rappel en profondeur du mécanisme presseur 40.

L'unité de synchronisation 21 commande alors, via l'unité de déplacement longitudinal 15, l'enclenchement du moteur de défilement longitudinal 17 afin de mettre le tambour 4 en rotation et ainsi créer la composante de déplacement relatif M15 selon la direction longitudinale L13.

Simultanément, l'unité de synchronisation 21 pilote, via l'unité de déplacement transversal 16 et l'activation du moteur de déplacement transversal 20, le déplacement de la table de déplacement transversal 18, selon un mouvement alterné de va-et-vient dirigé selon la direction transversale 13, dont l'amplitude correspond à l'amplitude des ondulations 14A, 14B, 14C souhaitées, et ce de manière à générer la composante de mouvement relatif transversal M16.

La combinaison de ces deux composantes longitudinale M15 et transversale M16, et en particulier la synchronisation des vitesses des moteurs de défilement longitudinal 17 et de déplacement transversal 20, définit à chaque instant le sens, la direction et la norme du vecteur directeur de la trajectoire de pose 13, selon lequel la bande de renfort 2 s'enroule progressivement sur le tambour 4.

Dans le même temps, l'unité de synchronisation 21 gère l'unité de pilotage en lacet 22 de sorte à orienter le rouleau applicateur 11 en lacet selon la direction azimutale du vecteur directeur de la trajectoire de pose 13 voulue. Cette orientation en lacet 22 est adaptée en permanence afin d'anticiper les variations de courbure de la trajectoire de pose 13 voulue.

Ainsi, l'unité de pilotage en lacet 22 contraint le rouleau applicateur 11 à adopter à chaque instant une orientation en lacet M22 qui est colinéaire au vecteur directeur de la trajectoire de pose 13, c'est-à-dire tangente à la trajectoire de pose 13 en cours de tracé, et dirige donc activement la bande de renfort 2 selon cette trajectoire de pose 13 désirée.

L'orientation en lacet M22 de l'arbre de lacet 26, de la chape 34, et donc du rouleau applicateur 11, par rapport au chariot de suspension en profondeur 41, et par conséquent l'orientation en lacet M22 du rouleau applicateur par rapport à la surface de pose 3, est définie et ajustée grâce à l'action du moteur de lacet 13, qui entraîne, via le pignon 24, la portion de couronne dentée 25 qui est elle-même solidaire de l'arbre de lacet 26.

Avantageusement, l'orientation en lacet M22 est ajustée de manière progressive de sorte à respecter la courbure de la trajectoire de pose 13.

On notera que la trajectoire de pose 13 pourra ainsi former une courbe sans rupture, qui suit typiquement un profil de courbe continu, et de préférence continûment dérivable, c'est-à-dire, mathématiquement, de classe (au moins) C¹.

Plus particulièrement, à chaque sommet d'une ondulation 14A, 14B, 14C, on inverse progressivement le signe de l'orientation en lacet M22 par rapport à la direction longitudinale L13, de sorte à pouvoir dessiner la courbure dudit sommet avec la bande de renfort 2, sans décoller ni froisser la bande de renfort 2 sur la surface de réception 3, et en appliquant ladite bande de renfort 2 en continu sur ladite surface de réception, toujours par la même face de ladite bande de renfort 2.

La précontrainte élastique en rapprochement M41 exercée par le chariot de suspension en profondeur 41 selon la direction de profondeur Y41, Y50, ainsi que la suspension en roulis M30 procurée par le mécanisme 30 de suspension en roulis, permet au rouleau applicateur 11 porteur de la bande de renfort 2 de rester en permanence au contact de la surface de réception 3, et de conserver un axe d'applique Y11 sensiblement normal à ladite surface de réception 3, y compris lorsque ledit rouleau applicateur 11 parcourt une portion gauche, typiquement une surface convexe torique, de ladite surface de réception 3, ou bien encore lorsque ledit rouleau applicateur 11 franchit un relief, du fait que ledit rouleau applicateur 11 rencontre une épaisseur de bande de renfort 2 déjà en place sur la surface de réception 3, ou franchit un creux, lorsque ledit rouleau applicateur 11 quitte une épaisseur de bande de renfort 2 pour "redescendre" plus près de la surface de réception 3.

On peut réaliser ainsi une pose de la bande de renfort 2 en sinus, sur la circonférence fermée et circulaire du tambour 4.

De préférence, on réalise plusieurs tours de tambour 4 successifs, de manière à ce que, la bande de renfort 2 soit posée d'un seul tenant sans interruption sur cette pluralité de tours et que, à chaque tour, ladite bande de renfort en cours de pose se superpose à une ou des portions de cette même bande de renfort posées lors des tours précédents, en se croisant avec lesdites portions.

De la sorte, on obtient finalement un treillis de renfort qui recouvre la surface de réception 3 du tambour 4, tel que cela est illustré sur la figure 2.

Bien entendu, l'amplitude et la période spatiale des ondulations 14, 14B, 14C, le nombre d'épaisseurs successives de bande de renfort 2 sur la surface de réception 3, le nombre de tours effectués par le tambour 4 pour former un treillis de renfort, et le taux de couverture, c'est-à-dire le rapport entre la superficie occupée par la bande de renfort 2 et la superficie totale de la surface de réception 3 du tambour 4, pourront être librement choisis.

Une fois la pose achevée, les mouvements longitudinaux M15 et transversaux M16 sont stoppés, et la tête de pose 10 éloigne le rouleau applicateur 11 de la surface de réception 3.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou de leur substituer des équivalents. L'invention n'est limitée que par les revendications annexées.

## Revendications

1. Dispositif (1) de pose de bande de renfort (2) pour le renforcement d'un bandage, de préférence d'un bandage pneumatique, ledit dispositif comprenant :
- une surface de réception (3),
- une tête de pose (10) portant un rouleau applicateur (11) qui est monté en rotation sur un axe central de rouleau (Z11) de sorte à pouvoir acheminer par roulement une bande de renfort (2) et presser ladite bande de renfort contre la surface de réception (3),
- un système d'entraînement (12) permettant de créer un mouvement relatif de la tête de pose (10) par rapport à la surface de réception (3) de sorte à pouvoir faire décrire à la bande de renfort (2) posée sur ladite surface de réception un tracé dit « trajectoire de pose » (13) qui présente, selon une direction longitudinale, une succession d'ondulations (14A, 14B, 14C), dans lequel le système d'entraînement (12) comprend à cet effet :
- une unité (15) de déplacement longitudinal, qui génère une première composante de déplacement relatif (M15) entre la surface de réception (3) et le rouleau applicateur (11) selon la direction longitudinale (L13),
- une unité (16) de déplacement transversal, qui génère une seconde composante de déplacement relatif (M16) du rouleau applicateur (11) par rapport à la surface de réception (3), selon une direction transversale (T13) sécante à la direction longitudinale (L13), et sous forme d'un va-et-vient qui correspond à une amplitude souhaitée des ondulations (14A, 14B, 14C),
- et **caractérisé par** une unité (22) de pilotage en lacet, synchronisée avec les unités (15, 16) de déplacement longitudinal et de déplacement transversal, qui pilote et ajuste automatiquement, au moyen d'un moteur de lacet (23), l'orientation en lacet (M22) de l'axe central (Z11) du rouleau applicateur (11), considérée en azimut autour d'un axe dit « axe de lacet » (Z22) qui est normal à un plan de référence (P13) défini par la direction longitudinale (L13) et la direction transverse (T13), de sorte à conférer à la bande de renfort (2) en cours de pose une orientation en lacet (M22) qui correspond à l'orientation en lacet de la trajectoire de pose (13) à réaliser.

2. Dispositif selon la revendication 1 **caractérisé en ce que** la tête de pose comprend un mécanisme de suspension en roulis (30) qui autorise un débattement en roulis (M30) du rouleau applicateur (11) par rapport à la direction longitudinale (L13), autour d'un axe de roulis (Z30), et qui comprend au moins un organe de rappel en roulis (31, 32) qui tend à rappeler le rouleau applicateur (11) vers une inclinaison en roulis de référence, de préférence vers une inclinaison en roulis nulle selon laquelle l'axe central du rouleau (Z11) est parallèle au plan de référence (P13).

3. Dispositif selon la revendication 2 **caractérisé en ce que** le mécanisme de suspension en roulis (30) comprend un palonnier (35) pourvu de deux bras (36, 37) qui s'étendent de part et d'autre de l'axe de roulis (Z30) et qui sont couplés respectivement à un premier organe de rappel (31), de préférence un premier ressort de traction, et à un second organe de rappel (32), de préférence un second ressort de traction.

4. Dispositif selon la revendication 2 ou 3 **caractérisé en ce que** l'axe de roulis (Z30) est orienté par rapport à la surface de réception (3) selon un angle de chasse (C30) positif, de préférence compris entre 60 degrés et 85 degrés, et plus préférentiellement égal à 75 degrés.

5. Dispositif selon l'une des revendications 2 à 4 **caractérisé en ce que** l'axe de roulis est incliné par rapport à la surface de réception (3) de telle sorte que ledit axe de roulis (Z30), la fibre neutre (L2) de la bande de renfort (2) qui est en cours de pose sur la surface de réception (3), et enfin un axe dit « axe d'applique » (Y11), qui est perpendiculaire à l'axe central (Z11) du rouleau applicateur (11), contenu dans le plan sagittal (PS11) dudit rouleau applicateur, et qui passe par le contact formé, via la bande renfort (2), entre le rouleau applicateur (11) et la surface de réception (3), sont concourants.

6. Dispositif selon l'une des revendications précédentes **caractérisé en ce que** la tête de pose (10) comporte un mécanisme presseur (40) comprenant un chariot dit « chariot de suspension en profondeur » (41) qui porte le rouleau applicateur (11) et l'unité de pilotage en lacet (22), qui est guidé en translation selon une direction dite « direction de profondeur » (Y41) normale au plan de référence (P13), et qui est précontraint élastiquement, de préférence par un ou des ressorts de compression (42, 43), en direction de la surface de réception (3), afin de maintenir le rouleau applicateur (11) et la bande de renfort (2) au contact de la surface de réception (3).

7. Dispositif selon l'une des revendications précédentes **caractérisé en ce que** la tête de pose (10) présente une structure étagée qui comprend successivement :
- une embase (50),
- une table de rapprochement (51) qui est montée mobile en translation rectiligne sur l'embase (50) selon une direction dite « direction de profondeur » (Y51) qui est normale au plan de référence (P13), de sorte à pouvoir rapprocher ou éloigner le rouleau applicateur (11) de la surface de réception (3),
- une table de déplacement transversal (18) qui appartient à l'unité de déplacement transversal (16) et qui est montée mobile en translation rectiligne sur la table de rapprochement (50), selon la direction transversale (T13) qui est perpendiculaire à la direction de profondeur (Y50), de sorte à pouvoir générer et guider la seconde composante de mouvement relatif (M16) du rouleau applicateur (11) par rapport à la surface de réception (3),
- un chariot (41), dit « chariot de suspension en profondeur», monté mobile en translation rectiligne sur la table de déplacement transversal (18), selon la direction de profondeur (Y50), et précontraint élastiquement vers la surface de réception (3),
- l'unité de pilotage en lacet (22), portée par ledit chariot de suspension en profondeur (41), et qui comprend un arbre de lacet (26) qui s'étend selon un axe de lacet (Z22) parallèle à la direction de profondeur (Y50), et qui est de préférence déporté par rapport à l'axe central (Z11) du rouleau applicateur, ledit arbre de lacet (26) étant entraîné en rotation par rapport au chariot de suspension en profondeur (41) au moyen du moteur de lacet (23),
- un mécanisme de suspension en roulis (30) qui comprend un pivot de roulis (33) par lequel une chape (34) portant le rouleau applicateur (11) s'articule sur l'arbre de lacet (26), selon un axe de roulis (Z30) qui est incliné par rapport à la direction de profondeur (Y50) de sorte à conférer au rouleau applicateur, par rapport à la normale à la surface de réception (3), un angle de chasse (C30) positif

8. Dispositif selon l'une des revendications précédentes **caractérisé en ce que** la surface de réception (3) est formée par un tambour (4) monté en rotation autour d'un axe central de tambour (Z4) qui est parallèle à la direction transversale (T13), et dont la ligne équatoriale (E4) circonférentielle définit la direction longitudinale (L13).

## Patentansprüche

1. Vorrichtung (1) zur Anbringung eines Verstärkungsstreifens (2) zur Verstärkung eines Reifens, vorzugsweise eines Luftreifens, die Vorrichtung umfassend:
- eine Aufnahmefläche (3),
- einen Anbringungskopf (10), der eine Aufbringrolle (11) trägt, die auf einer Rollenmittelachse (Z11) drehbar gelagert ist, so dass durch Drehung ein Verstärkungsstreifen (2) transportiert und der Verstärkungsstreifen gegen die Aufnahmefläche (3) gepresst werden kann,
- ein Antriebssystem (12), mit dem eine relative Bewegung des Anbringungskopfes (10) bezogen auf die Aufnahmefläche (3) erzeugt werden kann, damit der Verstärkungsstreifen (2), der auf der Aufnahmefläche angebracht ist, einen Pfad, der als "Anbringungsbahn" (13) genannt wird, beschreiben kann, der in einer Längsrichtung eine Aufeinanderfolge von Wellungen (14A, 14B, 14C) aufweist,
wobei das Antriebssystem (12) zu diesem Zweck Folgendes umfasst:
- eine Längsverschiebungseinheit (15), die eine erste Komponente relativer Verschiebung (M15) zwischen der Aufnahmefläche (3) und der Aufbringrolle (11) in der Längsrichtung (L13) erzeugt,
- eine Querverschiebungseinheit (16), die eine zweite Komponente relativer Verschiebung (M16) der Aufbringrolle (11) bezogen auf die Aufnahmefläche (3) in einer die Längsrichtung (L13) schneidenden Querrichtung (T13) und in Form eines Hin und Hers erzeugt, die einer gewünschten Amplitude der Wellungen (14A, 14B, 14C) entspricht,
- und **gekennzeichnet durch** eine Giersteuerungseinheit (22), die mit den Einheiten (15, 16) zur Längs- und Querverschiebung synchronisiert ist, die mittels eines Giermotors (23) automatisch die Gierausrichtung (M22) der Mittelachse (Z11) der Aufbringrolle (11) steuert und anpasst, die im Azimut um eine Achse, die als "Gierachse" genannt wird, (Z22) betrachtet wird, welche Gierachse normal zu einer Bezugsebene (P13) verläuft, die von der Längsrichtung (L13) und der Querrichtung (T13) definiert ist, um dem Verstärkungsstreifen (2), der angebracht wird, eine Gierausrichtung (M22) zu verleihen, die der Gierausrichtung der zu erzielenden Anbringungsbahn (13) entspricht.

2. Vorrichtung nach Anspruch 1, **dadurch gekennzeichnet, dass** der Anbringungskopf einen Roll-Aufhängungsmechanismus (30) umfasst, der einen Rollausschlag (M30) der Aufbringrolle (11) bezogen auf die Längsrichtung (L13) um eine Rollachse (Z30) ermöglicht und der wenigstens ein Rollrückholorgan (31, 32) umfasst, das bestrebt ist, die Aufbringrolle (11) zu einer Referenzrollneigung zurückzuholen, vorzugsweise zu einer Null-Rollneigung, bei welcher die Mittelachse der Rolle (Z11) parallel zur Bezugsebene (P13) verläuft.

3. Vorrichtung nach Anspruch 2, **dadurch gekennzeichnet, dass** der Roll-Aufhängungsmechanismus (30) einen Hebel (35) umfasst, der mit zwei Armen (36, 37) versehen ist, die sich beiderseits der Rollachse (Z30) erstrecken und an ein erstes Rollrückholorgan (31), vorzugsweise eine erste Zugfeder, beziehungsweise an ein zweites Rollrückholorgan (32), vorzugsweise eine zweite Zugfeder, gekoppelt sind.

4. Vorrichtung nach Anspruch 2 oder 3, **dadurch gekennzeichnet, dass** die Rollachse (Z30) mit einem positiven Nachlaufwinkel (C30), vorzugsweise zwischen 60 Grad und 85 Grad und besser noch gleich 75 Grad, bezogen auf die Aufnahmefläche (3) orientiert ist.

5. Vorrichtung nach einem der Ansprüche 2 bis 4, **dadurch gekennzeichnet, dass** die Rollachse bezogen auf die Aufnahmefläche (3) so geneigt ist, dass die Rollachse (Z30), die neutrale Faser (L2) des Verstärkungsstreifens (2), der auf der Aufnahmefläche (3) angebracht wird, und schließlich eine Achse, die als "Aufbringungsachse" (Y11) genannt wird, die senkrecht zur Mittelachse (Z11) der Aufbringrolle (11) verläuft, die in der Sagittalebene (PS11) der Aufbringrolle enthalten ist und durch den Kontakt verläuft, der über den Verstärkungsstreifen (2) zwischen der Aufbringrolle (11) und der Aufnahmefläche (3) gebildet wird, konvergent sind.

6. Vorrichtung nach einem der vorhergehenden Ansprüche, **dadurch gekennzeichnet, dass** der Anbringungskopf (10) einen Pressmechanismus (40) aufweist, der einen Schlitten, der als "Tiefen-Aufhängungsschlitten" (41) gennant ist, umfasst, der die Aufbringrolle (11) und die Giersteuerungseinheit (22) trägt, der in einer Richtung translatorisch geführt wird, die als "Tiefenrichtung" (Y41) genannt wird und die normal zur Bezugsebene (P13) verläuft, und der in Richtung der Aufnahmefläche (3) elastisch vorgespannt ist, vorzugsweise durch eine oder mehrere Druckfedern (42, 43), um die Aufbringrolle (11) und den Verstärkungsstreifen (2) mit der Aufnahmefläche (3) in Kontakt zu halten.

7. Vorrichtung nach einem der vorhergehenden Ansprüche, **dadurch gekennzeichnet, dass** der Anbringungskopf (10) eine gestufte Struktur aufweist, die aufeinanderfolgend Folgendes umfasst:
- ein Unterteil (50),
- einen Annäherungstisch (51), der auf dem Unterteil (50) in einer Richtung, die als "Tiefenrichtung" (Y51) genannt wird und die normal zur Bezugsebene (P13) verläuft, translatorisch geradlinig bewegbar gelagert ist, um die Aufbringrolle (11) an die Aufnahmefläche (3) annähern oder davon entfernen zu können,
- einen Querverschiebungstisch (18), der zur Querverschiebungseinheit (16) gehört und der auf dem Annäherungstisch (50) in der Querrichtung (T13), die senkrecht zur Tiefenrichtung (Y50) verläuft, translatorisch geradlinig bewegbar gelagert ist, um die zweite Komponente relativer Bewegung (M16) der Aufbringrolle (11) bezogen auf die Aufnahmefläche (3) erzeugen und führen zu können,
- einen Schlitten, der als "Tiefen-Aufhängungsschlitten" (41) genannt wird, und der auf dem Querverschiebungstisch (18) in der Tiefenrichtung (Y50) translatorisch geradlinig bewegbar gelagert und zur Aufnahmefläche (3) elastisch vorgespannt ist,
- die Giersteuerungseinheit (22), die vom Tiefen-Aufhängungsschlitten (41) getragen wird und eine Gierwelle (26) umfasst, die sich entlang einer Gierachse (Z22) parallel zur Tiefenrichtung (Y50) erstreckt und vorzugsweise bezogen auf die Mittelachse (Z11) der Aufbringrolle versetzt ist, wobei die Gierwelle (26) mittels des Giermotors (23) bezogen auf den Tiefen-Aufhängungsschlitten (41) gedreht wird,
- einen Roll-Aufhängungsmechanismus (30), der einen Roll-Drehzapfen (33) umfasst, mit dem eine Gabel (34), die die Aufbringrolle (11) trägt, an der Gierwelle (26) entlang einer Rollachse (Z30) angelenkt ist, die bezogen auf die Tiefenrichtung (Y50) geneigt ist, um der Aufbringrolle bezogen auf die Normale der Aufnahmefläche (3) einen positiven Nachlaufwinkel (C30) zu geben.

8. Vorrichtung nach einem der vorhergehenden Ansprüche, **dadurch gekennzeichnet, dass** die Aufnahmefläche (3) von einer Trommel (4) gebildet ist, die um eine Trommelmittelachse (Z4) drehbar gelagert ist, die parallel zur Querrichtung (T13) verläuft und deren Äquatorlinie (E4) in Umfangsrichtung die Längsrichtung (L13) definiert.

## Claims

1. Device (1) for laying a reinforcing strip (2) for reinforcing a tyre, preferably a pneumatic tyre, said device comprising:
- a receiving surface (3),
- a laying head (10) bearing an applicator roller (11) which is mounted in a rotatable manner on a central roller axis (Z11) so as to be able to feed a reinforcing strip (2) by rolling and to press said reinforcing strip against the receiving surface (3),
- a drive system (12) for creating a relative movement of the laying head (10) with respect to the receiving surface (3) so as to be able to make the reinforcing strip (2) laid on said receiving surface follow a path referred to as the "laying trajectory" (13) which has a succession of undulations (14A, 14B, 14C) in a longitudinal direction,
wherein the drive system (12) comprises, to this end:
- a longitudinal-displacement unit (15), which generates a first relative-displacement component (M15) between the receiving surface (3) and the applicator roller (11) in the longitudinal direction (L13),
- a transverse-displacement unit (16), which generates a second relative-displacement component (M16) of the applicator roller (11) with respect to the receiving surface (3), in a transverse direction (T13) that intersects the longitudinal direction (L13), and in the form of a back and forth movement that corresponds to a desired amplitude of the undulations (14A, 14B, 14C),
- and **characterized by** a yaw steering unit (22), synchronized with the longitudinal-displacement and transverse-displacement units (15, 16), which steers and automatically adjusts, by means of a yaw motor (23), the yaw orientation (M22) of the central axis (Z11) of the applicator roller (11), considered in terms of azimuth about an axis known as the "yaw axis" (Z22) which is normal to a reference plane (P13) defined by the longitudinal direction (L13) and the transverse direction (T13), so as to confer on the reinforcing strip (2) being laid a yaw orientation (M22) which corresponds to the yaw orientation of the laying trajectory (13) to be realized.

2. Device according to Claim 1, **characterized in that** the laying head comprises a roll suspension mechanism (30) which allows roll travel (M30) of the applicator roller (11) with respect to the longitudinal direction (L13), about a roll axis (Z30), and which comprises at least one roll return member (31, 32) which tends to return the applicator roller (11) to a reference roll inclination, preferably to a zero roll inclination in which the central axis (Z11) of the roller is parallel to the reference plane (P13).

3. Device according to Claim 2, **characterized in that** the roll suspension mechanism (30) comprises a yoke (35) provided with two arms (36, 37) that extend on either side of the roll axis (Z30) and are coupled respectively to a first return member (31), preferably a first tension spring, and a second return member (32), preferably a second tension spring.

4. Device according to Claim 2 or 3, **characterized in that** the roll axis (Z30) is oriented with respect to the receiving surface (3) at a positive caster angle (C30), preferably between 60 degrees and 85 degrees, and more preferably equal to 75 degrees.

5. Device according to one of Claims 2 to 4, **characterized in that** the roll axis is inclined with respect to the receiving surface (3) such that said roll axis (Z30), the neutral axis (L2) of the reinforcing strip (2) being laid on the receiving surface (3), and finally an axis referred to as the "pressing axis" (Y11), which is perpendicular to the central axis (Z11) of the applicator roller (11), is contained in the sagittal plane (PS1 1) of said applicator roller, and passes through the contact formed, via the reinforcing strip (2), between the applicator roller (11) and the receiving surface (3), are concurrent.

6. Device according to one of the preceding claims, **characterized in that** the laying head (10) has a pressing mechanism (40) comprising a carriage referred to as the "depth suspension carriage" (41) which carries the applicator roller (11) and the yaw steering unit (22), which is guided in translation in a direction referred to as the "depth direction" (Y41) normal to the reference plane (P13), and which is elastically preloaded, preferably by one or more compression springs (42, 43), in the direction of the receiving surface (3) in order to keep the applicator roller (11) and the reinforcing strip (2) in contact with the receiving surface (3).

7. Device according to one of the preceding claims, **characterized in that** the laying head (10) has a tiered structure that comprises, successively:
- a base (50),
- a positioning table (51) which is mounted on the base (50) so as to be movable in rectilinear translation in a direction referred to as the "depth direction" (Y51) which is normal to the reference plane (P13), so that it is possible to move the applicator roller (11) towards or away from the receiving surface (3),
- a transverse-displacement table (18) which belongs to the transverse-displacement unit (16) and which is mounted on the positioning table (50) so as to be movable in rectilinear translation in the transverse direction (T13), which is perpendicular to the depth direction (Y50), so that it is possible to generate and guide the second relative-movement component (M16) of the applicator roller (11) with respect to the receiving surface (3),
- a carriage (41), referred to as the "depth suspension carriage", which is mounted on the transverse-displacement table (18) so as to be movable in rectilinear translation in the depth direction (Y50) and is elastically preloaded towards the receiving surface (3),
- the yaw steering unit (22), which is carried by said depth suspension carriage (41) and comprises a yaw shaft (26) that extends along a yaw axis (Z22) parallel to the depth direction (Y50), and that is preferably offset with respect to the central axis (Z11) of the applicator roller, said yaw shaft (26) being driven in rotation with respect to the depth suspension carriage (41) by means of the yaw motor (23),
- a roll suspension mechanism (30) which comprises a roll pin (33) by which a fork (34) carrying the applicator roller (11) is articulated to the yaw shaft (26), about a roll axis (Z30) which is inclined with respect to the depth direction (Y50) so as to confer a positive caster angle (C30) on the applicator roller with respect to the normal to the receiving surface (3).

8. Device according to one of the preceding claims, **characterized in that** the receiving surface (3) is formed by a drum (4) which is mounted so as to rotate about a central drum axis (Z4) that is parallel to the transverse direction (T13), and the circumferential equatorial line (E4) of which defines the longitudinal direction (L13).
